# EUROPEAN PATENT APPLICATION

(11) **EP 4 520 163 A1**
(43) Date of publication of application: **12.03.2025**
(21) Application number: 23829845.9
(22) Date of filing: 01.06.2023
(51) Int. Cl.: A01G 3/08

(54) **PRUNER**

(30) Priority: 30.06.2022 CN 202210762478; 30.06.2022 CN 202210759610; 30.06.2022 CN 202210759617; 30.06.2022 CN 202210762477; 09.02.2023 CN 202320200054 U
(71) Applicant: Nanjing Chervon Industry Co., Ltd., Nanjing, Jiangsu 211106 (CN)
(72) Inventor: YAMAOKA, Toshinari, Nanjing, Jiangsu 211106 (CN); YI, Min, Nanjing, Jiangsu 211106 (CN); ZHAO, Xiaozhe, Nanjing, Jiangsu 211106 (CN); GAO, Lei, Nanjing, Jiangsu 211106 (CN)
(74) Representative: Sun, Yiming
(86) International application number: PCT/CN2023/097708
(87) International publication number: WO 2024/001660

(57) **Abstract**

Provided is a hedge trimmer. The hedge trimmer includes a front end device including at least a cutting assembly extending along a longitudinal axis and a front housing for supporting the cutting assembly; a rear end device including at least a motor for driving the cutting assembly and a rear housing for supporting the motor; a connecting rod connecting the front end device to the rear end device; a power device supported by the rear housing and configured to supply electrical energy to the motor; a main handle connected to a first switch; and a second switch disposed on a front side of the first switch. In a direction of the longitudinal axis, the distance between the first switch and a first cutting tooth of the cutting assembly is greater than or equal to 120 mm and less than or equal to 1000 mm.

## Description

This application claims priority to Chinese Patent Application No. 202210762478.2 filed with the China National Intellectual Property Administration (CNIPA) on Jun. 30, 2022, Chinese Patent Application No. 202210759610.4 filed with the CNIPA on Jun. 30, 2022, Chinese Patent Application No. 202210759617.6 filed with the CNIPA on Jun. 30, 2022, Chinese Patent Application No. 202210762477.8 filed with the CNIPA on Jun. 30, 2022, and Chinese Patent Application No. 202320200054.7 filed with the CNIPA on Feb. 9, 2023, the disclosures of which are incorporated herein by reference in their entireties.

### TECHNICAL FIELD

The present application relates to garden tools, for example, a hedge trimmer.

### BACKGROUND

As a garden tool, a hedge trimmer may be operated by a user to prune vegetation such as shrubs and hedges. A hedge trimmer generally includes a housing, a motor, a transmission device, and a cutting assembly. The cutting assembly includes a first blade and a second blade that are movable relative to each other to implement a cutting function. The cutting height, miniaturization, and portability of most of the hedge trimmers in the related art cannot be ensured at the same time, and most of the hedge trimmers in the related art that can be held with two hands do not have two switches, causing the safety factor to be low. In addition, since the overall length of the hedge trimmer is relatively long, an auxiliary handle of the hedge trimmer in the related art is generally mounted to a rear housing or independently fixed on a connecting rod, the structural stability is poor, and the user is prone to fatigue during operation.

### SUMMARY

To solve the deficiencies in the existing art, the present application provides a hedge trimmer.

The present application adopts the technical solutions described below.

A hedge trimmer includes a front end device including at least a cutting assembly extending along a longitudinal axis and a front housing for supporting the cutting assembly; a rear end device including at least a motor for driving the cutting assembly and a rear housing for supporting the motor; a connecting rod connecting the front end device to the rear end device; a power device supported by the rear housing and configured to supply electrical energy to the motor; a main handle connected to a first switch; and a second switch disposed on a front side of the first switch. In a direction of the longitudinal axis, the distance between the first switch and a first cutting tooth of the cutting assembly is greater than or equal to 120 mm and less than or equal to 1000 mm.

A hedge trimmer includes a front end device including at least a cutting assembly extending along a longitudinal axis and a front housing for supporting the cutting assembly; a rear end device including at least a motor for driving the cutting assembly and a rear housing for supporting the motor; a connecting rod connecting the front end device to the rear end device; a power device supported by the rear housing and configured to supply electrical energy to the motor; and an operating assembly used for a user to operate to control the operation of the motor and including at least a first switch and a second switch, where the second switch is disposed on a front side of the first switch. In a direction of the longitudinal axis, the distance from a front end of the cutting assembly to a rear end of the rear housing is greater than or equal to 1.1 m and less than or equal to 2.2 m.

A hedge trimmer includes a front end device including at least a cutting assembly extending along a longitudinal axis and a front housing for supporting the cutting assembly; a rear end device including at least a motor for driving the cutting assembly and a rear housing for supporting the motor; a connecting rod connecting the front end device to the rear end device; a power device supported by the rear housing and configured to supply electrical energy to the motor; a main handle connected to a first switch; and a second switch disposed on a front side of the first switch. In a direction of the longitudinal axis, the ratio of the distance from the first switch to a first cutting tooth of the cutting assembly to the distance from the second switch to the first cutting tooth is greater than or equal to 1 and less than or equal to 8.3.

A hedge trimmer includes a front end device including at least a cutting assembly extending along a longitudinal axis and a front housing for supporting the cutting assembly; a rear end device including at least a motor for driving the cutting assembly and a rear housing for supporting the motor; a connecting rod extending along a first axis and connecting the front end device to the rear end device; a power device supported by the rear housing and configured to supply electrical energy to the motor; and an operating assembly used for a user to operate to control the operation of the motor and including at least a first switch and a second switch, where the second switch is disposed on a front side of the first switch. The hedge trimmer further includes a transmission device driven by the motor, at least part of the transmission device is disposed in the front housing, and the distance from the center of gravity of the hedge trimmer to the first axis is greater than or equal to 0 and less than or equal to 30 mm.

A hedge trimmer includes a front end device including at least a cutting assembly extending along a longitudinal axis and a front housing for supporting the cutting assembly; a rear end device including at least a motor for driving the cutting assembly and a rear housing for supporting the motor; a connecting rod connecting the front end device to the rear end device; an auxiliary handle having at least one grip and connected to a second switch for a user to operate; and a main handle connected to a first switch. The front housing is formed with or connected to a first connection end for mounting the connecting rod, the first connection end is formed with a first end surface, and the distance from each of the at least one grip to a plane where the first end surface is located is greater than or equal to 0 and less than or equal to 90 mm.

A pole hedge trimmer includes a body and an energy source capable of providing a source of energy for the body. The body includes a blade assembly including a first blade and a second blade capable of reciprocating along a direction of a first straight line relative to the first blade; a power assembly capable of driving the second blade to move relative to the first blade; a transmission device connecting the power assembly to the blade assembly and including a first housing and a second housing connected to the first housing to form an accommodation cavity; a transmission assembly being capable of transmitting power between the power assembly and the blade assembly and disposed in the accommodation cavity; a fastening assembly including a connecting rod connecting the second housing, the transmission assembly, and the first housing and at least two fasteners; and a bushing disposed between the connecting rod and the first housing.

### BRIEF DESCRIPTION OF DRAWINGS

FIG. 1 is a perspective view of a hedge trimmer according to an example.
FIG. 2 is a perspective view of the hedge trimmer in FIG. 1 with a rear housing disassembled.
FIG. 3 is a partial perspective view of the hedge trimmer in FIG. 1 with a front housing disassembled.
FIG. 4 is an exploded view of a first transmission device located in a front housing.
FIG. 5 is a perspective view of a connecting rod assembly.
FIG. 6 is a perspective view of the connecting rod assembly in FIG. 5 from another perspective.
FIG. 7 is a perspective view of a cutting assembly suitable for the hedge trimmer in FIG. 1 according to another example.
FIG. 8 is a partial exploded view of the cutting assembly in FIG. 7.
FIG. 9 is a perspective view of the hedge trimmer in FIG. 1 from another perspective.
FIG. 10 is a perspective view of the hedge trimmer in FIG. 1 from another perspective.
FIG. 11 is a perspective view illustrating the positional relationship between an auxiliary handle and a front housing.
FIG. 12 is a perspective view of an auxiliary handle, a connecting rod, and a front housing in FIG. 1.
FIG. 13 is a perspective view of the auxiliary handle in FIG. 12 after disassembled.
FIG. 14 is a perspective view of a pole hedge trimmer according to an example.
FIG. 15 is a schematic view illustrating some structures of the pole hedge trimmer in FIG. 14.
FIG. 16 is a sectional view of the pole hedge trimmer in FIG. 15 taken along a direction A-A.
FIG. 17 is a schematic view of the pole hedge trimmer in FIG. 14 with some structures separated.
FIG. 18 is a schematic view of the pole hedge trimmer in FIG. 14 with some structures separated.
FIG. 19 is a schematic view of the pole hedge trimmer shown in FIG. 18 from another perspective.
FIG. 20 is a partial enlarged view of the pole hedge trimmer shown in FIG. 14.
FIG. 21 is a schematic view of the pole hedge trimmer in FIG. 14 with some structures separated.
FIG. 22 is a plan view of a second fastener in FIG. 17.
FIG. 23 is a sectional view of the second fastener in FIG. 22 taken along a direction B-B.
FIG. 24 is a partial enlarged view of the pole hedge trimmer shown in FIG. 17.
FIG. 25 is a partial enlarged view of the pole hedge trimmer shown in FIG. 18.
FIG. 26 is a partial enlarged view of the pole hedge trimmer shown in FIG. 18 from another perspective.
FIG. 27 is a partial enlarged view of the pole hedge trimmer shown in FIG. 19.

### DETAILED DESCRIPTION

The present application is introduced below in conjunction with the accompanying drawings and example.

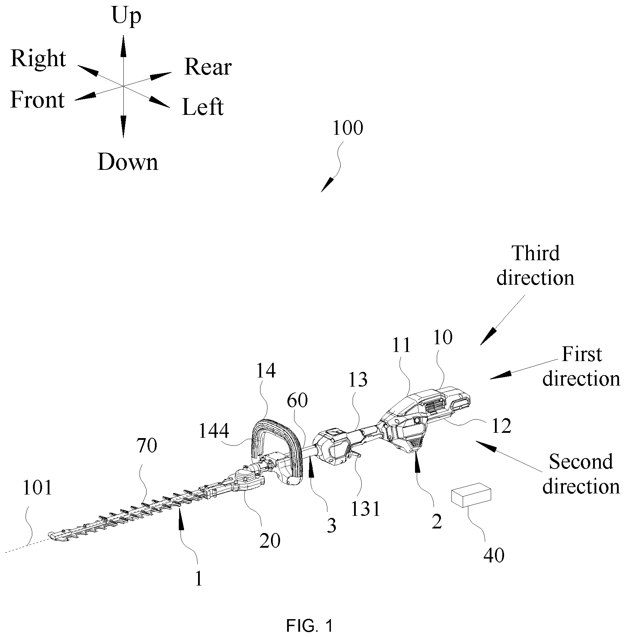

A hedge trimmer 100 as an example shown in FIG. 1 is configured for a user to operate to cut various shrubs, hedges and other vegetation. In order to facilitate the description of the technical solution of the present application, the directions indicated by the arrows in FIG. 1 are defined as: up, down, left, right, front and rear.

A person of ordinary skill in the art will understand that relative terms (e.g., "about", "approximately", "substantially", etc.) used in conjunction with quantities or conditions include the values and have the meaning indicated by the context (e.g., the term includes at least the degree of error associated with the measurement of a specific value, the tolerance associated with a specific value (e.g., manufacturing, assembly, use), etc.). Such terms should also be considered to disclose a range defined by the absolute values of the two endpoints. Relative terms may refer to the indicated value plus or minus a certain percentage (e.g., 1%, 5%, 10% or more). Of course, values that do not use relative terms should also be disclosed as specific values with tolerances.

As shown in FIGS. 1 to 4, the hedge trimmer 100 includes a front end device 1, a rear end device 2, and a connecting rod assembly 3. The front end device 1 includes a cutting assembly 70 for outputting power and a front housing 20 for supporting the cutting assembly 70. The rear end device 2 includes a motor 30 for driving the cutting assembly 70 and a rear housing 10 for supporting the motor 30. The connecting rod assembly 3 connects the front end device 1 to the rear end device 2. For example, the connecting rod assembly 3 includes a connecting rod 60 extending along the direction of a first axis 102. The hedge trimmer 100 further includes a power device 40 and a transmission assembly 50. The transmission assembly 50 is configured to transmit power between the motor 30 and the cutting assembly 70. The power device 40 is configured to supply electrical energy to the motor 30. In this example, the power device 40 may be a direct current (DC) power supply, such as a battery pack. Of course, the power device 40 may be set to alternating current (AC) power, such as mains power.

For example, the rear housing 10 includes an accommodation portion 11 for forming a first accommodation space 111, a main handle 13 for a user to hold, and a coupling portion 12 for connecting the power device 40. The motor 30 and part of the transmission assembly 50 are disposed in the first accommodation space 111 formed by the accommodation portion 11. The front housing 20 is disposed on the front side of the rear housing 10 and is formed with a second accommodation space (not shown in the figure) configured to accommodate part of the transmission assembly 50 and part of the cutting assembly 70. The cutting assembly 70 extends along a longitudinal axis 101. In this example, the front housing 20 and the rear housing 10 are located at two ends of the connecting rod 60 and are configured to support the connecting rod 60. In some examples, the main handle 13 is configured to be a structure independent from the rear housing 10. For example, the main handle 13 is independently sleeved on the connecting rod assembly 13, that is, the main handle 13 is independently sleeved on the connecting rod 60. In some examples, a grip for the user to hold is directly formed on the connecting rod 60, thereby replacing the main handle 13. It may also be understood as that the main handle 13 for the user to hold is not provided separately, but the original structure is improved to form the grip.

The motor 30 is disposed in the first accommodation space 111 and is located on the rear side of the main handle 13 and on the upper side of the coupling portion 12. When the power device 40 is connected to the coupling portion 12, in a plane perpendicular to the up and down direction, the projection of the motor 30 on the plane overlaps the projection of the power device 40 on the plane. For example, the motor 30 includes a motor shaft 31 that rotates about a motor axis 301. In this example, the motor 30 is configured to be an electric motor. In this manner, the reasonable arrangement of the position of the motor 30 can improve the balance of the entire hedge trimmer 100 and improve the user experience. Of course, the motor 30 may be disposed at other positions, for example, on the front side of the main handle 13 or in the second accommodation space.

The power device 40 is detachably connected to the coupling portion 12 and is configured to supply power to the motor 30. For example, in the front and rear direction, the coupling portion 12 is located on the rear side of the main handle 13. In some examples, the power device 40 is detachably connected to the coupling portion 12 along a first direction to supply power to the motor 30. The first direction is parallel to the direction of the longitudinal axis 101. In some examples, the power device 40 is detachably connected to the coupling portion 12 along a second direction to supply power to the motor 30. The second direction intersects with the direction of the longitudinal axis 101. In some examples, the power device 40 is detachably connected to the coupling portion 12 along a third direction to supply power to the motor 30. The third direction obliquely intersects with the direction of the longitudinal axis 101. Of course, when the power device 40 is detachably connected to the coupling portion 12 along the third direction, the coupling portion 12 on the rear housing 10 needs to be appropriately changed without affecting the position of the motor 30 in the rear housing 10. It is to be understood that, in some examples, the cutting angle of the cutting assembly 70 is adjustable, and the preceding longitudinal axis 101 should be understood as the longitudinal axis 101 generated when the cutting assembly 70 is adjusted to a state in which the cutting assembly 70 is parallel or basically parallel to the connecting rod 60.

In some examples, the power device 40 includes a battery pack, where the rated output voltage of the battery pack is greater than or equal to 18 V. For example, the rated output voltage of the battery pack is set to 56 V. In some other examples, the power device 40 includes two or more battery packs. The battery pack may be, for example, a lithium battery pack, including multiple electrically connected cell units, and the number of cell units determines the nominal voltage and power supply capacity of the battery pack. In the present application, the insertion direction of the power device 40 and the number of battery packs are not limited. In some other examples, the power device 40 may be configured to be a battery pack built into the rear housing 10.

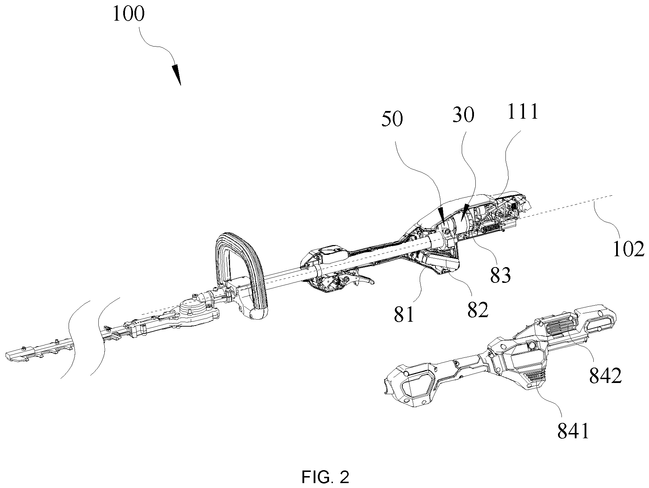

As shown in FIG. 2, the hedge trimmer 100 further includes a circuit board assembly 81, a heat dissipation plate 82, and a fan 83. The circuit board assembly 81 is electrically connected to the motor 30, the heat dissipation plate 82 is configured to dissipate heat for the circuit board assembly 81, and the fan 83 is configured to generate a heat dissipation airflow. The circuit board assembly 81, the heat dissipation plate 82, and the fan 83 are all disposed in the first accommodation space 111. The rear housing 10 is further formed with an airflow inlet 841 and an airflow outlet 842 connecting the inside and outside of the rear housing 10. When the fan 83 rotates, the fan 83 can generate the heat dissipation airflow that enters the rear housing 10 from the airflow inlet 841 and flows through the motor 30, thereby dissipating heat for the motor 30.

The transmission assembly 50 is configured to transmit power between the motor 30 and the cutting assembly 70. In this example, the transmission assembly 50 includes a first transmission device 51, a second transmission device 52, and a transmission shaft 53. The first transmission device 51 is connected to the motor 30 and disposed in the first accommodation space 111 formed by the rear housing 10. The second transmission device 52 is disposed in the second accommodation space formed by the front housing 20. The transmission shaft 53 extends along the direction of the first axis 102 and is configured to transmit power between the first transmission device 51 and the second transmission device 52. The front housing 20 may be understood as a box body of the second transmission device 52.

For example, the first transmission device 51 includes first transmission teeth 511 and second transmission teeth 512. The first transmission teeth 511 are connected to the motor shaft 31 of the motor 30 and are driven by the motor shaft 31 to rotate about the motor axis 301. The second transmission teeth 512 are driven by the first transmission teeth 511 to rotate about the first axis 102. The motor axis 301 is parallel to the first axis 102. In this example, the first transmission teeth 511 and the second transmission teeth 512 are configured to be helical gears. In this manner, when the hedge trimmer 100 operates, the first transmission device 51 is featured with lower noise and more stable transmission. In this manner, by adopting the one-stage transmission, the height of the transmission assembly 50 in the up and down direction can be greatly reduced so that when the user operates the hedge trimmer 100 to work, the center of gravity of the whole machine is closer to the connecting rod 60, thereby improving the operating feel of the user.

The second transmission device 52 is disposed in the front housing 20 and is configured to convert the rotation transmitted from the motor 30 into a reciprocating motion of the cutting assembly 70. The second transmission device 52 includes a first bevel gear 521, a second bevel gear 522, and an eccentric shaft 525. The first bevel gear 521 is connected to the transmission shaft 53 and is driven by the transmission shaft 53 to rotate about the first axis 102. The second bevel gear 522 is driven by the first bevel gear 521 to rotate about a second axis 103 that is perpendicular to the first axis 102. The second bevel gear 522 drives the eccentric shaft 525 to rotate synchronously with the second bevel gear 522 about the second axis 103. In this example, the first bevel gear 521 has a first conical surface 5211, and the distance from the second axis 103 to the first conical surface 5211 is less than or equal to 18 mm. For example, the distance from the second axis 103 to the first conical surface 5211 is less than or equal to 15 mm. For example, the distance from the second axis 103 to the first conical surface 5211 is less than or equal to 12 mm.

A first eccentric wheel portion 523 and a second eccentric wheel portion 524 are further formed on the eccentric shaft 525. The first eccentric wheel portion 523 and the second eccentric wheel portion 524 are both rotatable about the second axis 103. For example, the first eccentric wheel portion 523 is configured to mate with a first blade 71, and the second eccentric wheel portion 524 is configured to mate with a second blade 72. In this example, the centers of the first eccentric wheel portion 523 and the second eccentric wheel portion 524 are staggered, and the projections of the centers of the first eccentric wheel portion 523 and the second eccentric wheel portion 524 on a plane parallel to the first axis 102 are spaced apart by a certain distance. In this manner, the second bevel gear 522 drives the first eccentric wheel portion 523 and the second eccentric wheel portion 524 to rotate, thereby causing the first blade 71 and the second blade 72 to generate relative movement along the direction of the longitudinal axis 101.

In this example, the transmission assembly 50 is not a whole but is divided into the first transmission device 51 disposed on the rear side of the hedge trimmer 100 and the second transmission device 52 disposed on the front side of the hedge trimmer 100. In this manner, the weight of the transmission assembly 50 is evenly distributed in the front and rear direction of the hedge trimmer 100, thereby effectively improving the balance of the whole machine and improving the user experience. On the other hand, in the present application, the second transmission device 52 adopts the one-stage gear transmission, thereby effectively reducing the volume of the transmission assembly 50 and reducing the weight of the whole machine.

In some examples, a first oil fill port 22 connecting with the second accommodation space is further formed on the front housing 20, and in the up and down direction, the first oil fill port 22 is located at the meshing point of the first bevel gear 521 and the second bevel gear 522. The user can inject lubricating oil into the second transmission device 51 in the front housing 20 through the first oil fill port 22, thereby lubricating the transmission components, effectively reducing the wear of the transmission components, and extending the service life of the transmission components. In this manner, the lubricating oil injected into the front housing 20 by the user is quickly spread on the first bevel gear 521 and the second bevel gear 522 under the action of the first bevel gear 521 and the second bevel gear 522, thereby ensuring a better lubrication effect and preventing a large amount of lubricating oil from splashing on the inner wall of the front housing 20. In this example, a second oil fill port 23 is further included, and the lubricating oil is provided for the cutting assembly 70 through the second oil fill port 23. The position of the second oil fill port 23 is conventional, and the details are not repeated in the present application.

In this example, the connecting rod 60 connects the front housing 20 to the rear housing 10. The connecting rod 60 extends along the direction of the first axis 102 and forms a first end 61 and a second end 62. The first end 61 of the connecting rod 60 is supported by the front housing 20, that is, the first end 61 of the connecting rod 60 is fixedly connected to the front housing 20. The second end 62 of the connecting rod 60 is supported by the rear housing 10. For example, the second end 62 of the connecting rod 60 is supported by a gearbox 513 disposed in the rear housing 10 and used for accommodating the first transmission device 51. That is, the second end 62 of the connecting rod 60 is fixedly connected to the rear housing 10. For example, the front housing 20 is formed with or connected to a first connection end 21 for connecting the first end 61 of the connecting rod 60. A front end surface 5131 of the gearbox 513 is formed with or connected to a second connection end 5132 for connecting the second end 62 of the connecting rod 60. In this example, the first connection end 21 of the front housing 20 is sleeved on the first end 61 of the connecting rod 60 and assembled by screw fastening. The second connection end 5132 of the gearbox 513 is sleeved on the second end 62 of the connecting rod 60 and fixedly mounted in a tight fit manner. Of course, it is to be understood that the connection method and connection position between the connecting rod 60, the front housing 20, and the rear housing 10 may be designed by those skilled in the art according to actual application conditions and are not limited in the present application.

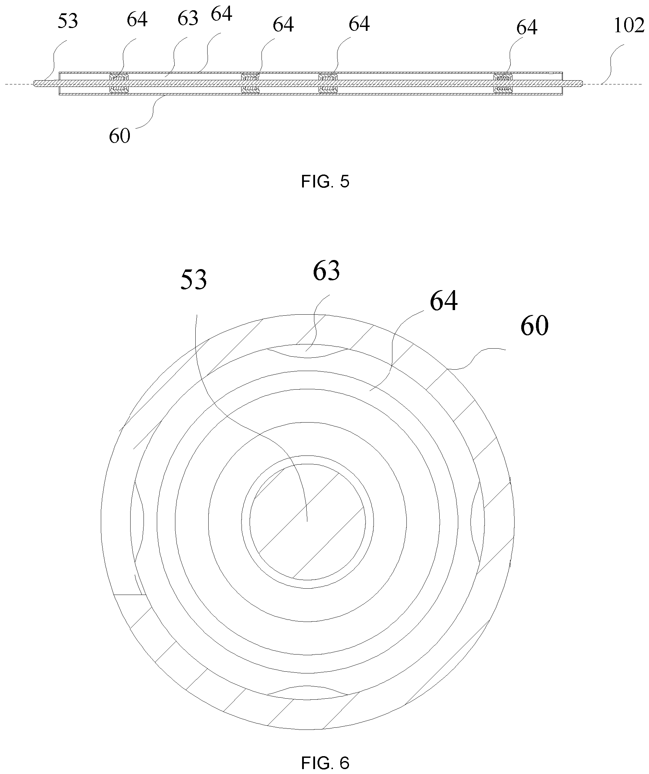

In some examples, referring to FIGS. 5 and 6, the connecting rod 60 extends along the direction of the first axis 102 and is a hollow structure. It is to be understood that the connecting rod 60 is formed with a first through hole 63 extending along the direction of the first axis 102, and the transmission shaft 53 is disposed in the first through hole 63 along the direction of the first axis 102. In some examples, the transmission shaft 53 may also be configured to be a hollow structure. In this example, the connecting rod 60 includes the carbon fiber material, and the ratio of the density to the tensile strength of the connecting rod 60 is greater than or equal to 4.5 kg/(m3•MPa) and less than or equal to 15 kg/(m3•MPa). The connecting rod 60 is manufactured in a special-shaped molding process. Of course, the connecting rod 60 may be made of a mixture of carbon fiber material and plastic.

In this manner, while the weight of the front part of the hedge trimmer 100 can be reduced, the strength of the connecting rod 60 of the hedge trimmer 100 can satisfy the requirements of the front housing 20 and the cutting assembly 70, thereby improving the working efficiency of the user, which is conducive to improving the position of the center of gravity of the hedge trimmer 100. The use of the preceding material can reduce the weight of the hedge trimmer 100, making it easier for the user to operate the hedge trimmer 100. In this example, the connecting rod 60 is configured to be a circular tube. It is to be understood that the connecting rod 60 may be configured to be a square tube or other shapes.

In some examples, the connecting rod assembly 3 further includes multiple limiting members 64 between the connecting rod 60 and a drive shaft 63. For example, the limiting members 64 are sleeved on the drive shaft 53 and are configured to limit the connecting rod 60 and the drive shaft 53 on the plane perpendicular to the first axis 102. Of course, the limiting members 64 may be directly connected to the inner wall of the connecting rod 60. In this manner, after the transmission shaft 53 is mounted in the connecting rod 60, under the action of multiple limiting members 64, the transmission shaft 53 and the connecting rod 60 have relatively high stability while a relatively high degree of coaxiality is ensured so that it can be ensured that when the user operates the hedge trimmer 100 for multi-angle cutting, the transmission shaft 53 can be well fixed in the connecting rod 60 and a relatively high degree of coaxiality is ensured.

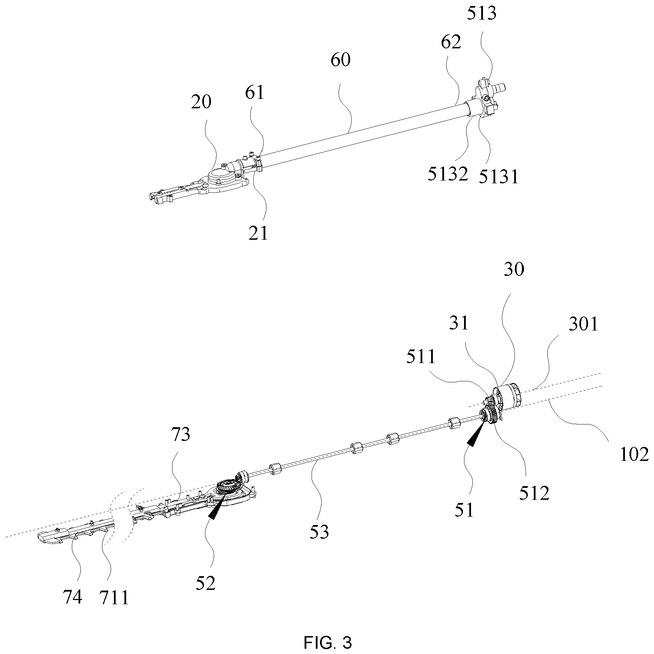

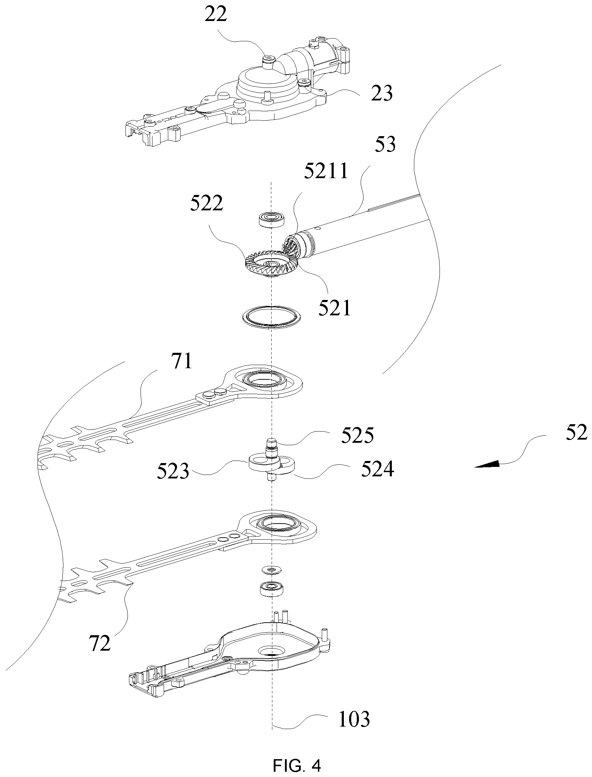

As shown in FIGS. 3 and 4, the cutting assembly 70 is configured to implement the cutting function of the hedge trimmer 100. A part of the cutting assembly 70 is accommodated in the second accommodation space formed by the front housing 20, and the other part of the cutting assembly 70 extends out of the second accommodation space along the direction of the longitudinal axis 101. In this example, the cutting assembly 70 includes the first blade 71 driven by the motor 30, the second blade 72 capable of reciprocating relative to the first blade 71 along the direction of the longitudinal axis 101, a blade support 73, and protective teeth 74. For example, the cutting assembly 70 extends along the direction of the longitudinal axis 101. Multiple cutting teeth 711 are disposed on both the first blade 71 and the second blade 72, and the multiple cutting teeth 711 are distributed at equal intervals along the direction of the longitudinal axis 101. The protective teeth 74 are configured to prevent the legs or arms of the user from being inserted between two adjacent cutting teeth 711. For example, the blade support 73 is made of a mixture of carbon fiber material and glass fiber material.

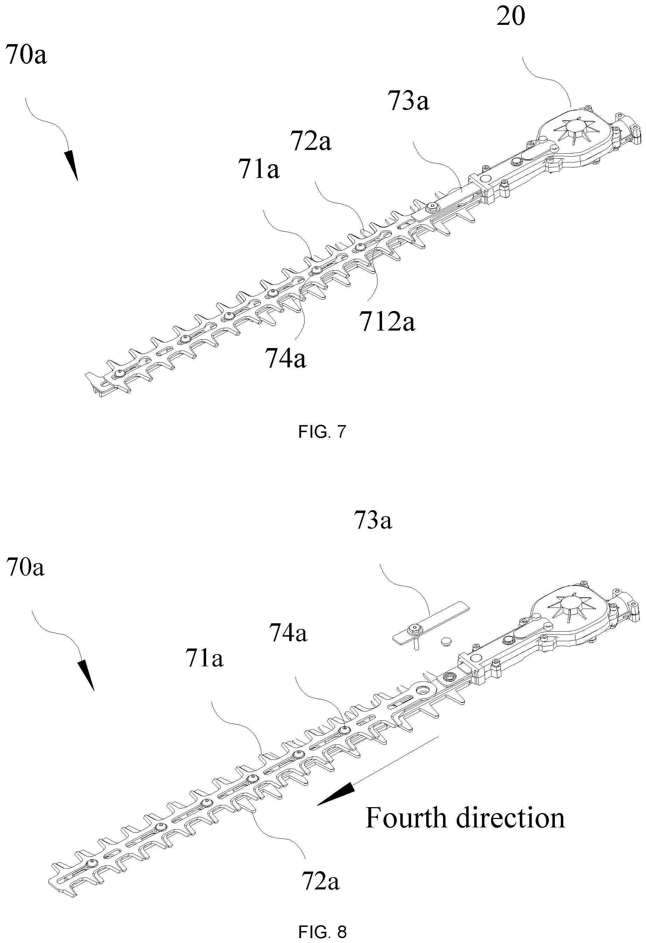

In some examples, the front housing 20 of the present application is applicable to a cutting assembly 70a shown in FIGS. 7 and 8. Different from the cutting assembly 70 in FIG. 1, when the cutting assembly 70a in this example needs to be replaced, the blades can be replaced without opening the front housing 20, which is more convenient.

For example, when the user needs to replace a first blade 71a of the cutting assembly 70a, the user loosens and removes the screw on a third fastener 73a and then moves the third fastener 73a along a fourth direction so that the third fastener 73a can be removed from the front housing 20. When the third fastener 73a is moved out, the first blade 71a is moved along the fourth direction. When a first hole 712a on the first blade 71a moves to a fourth fastener 74a, the first blade 71a can be moved upward and disengaged from the third fastener 73a. The above is the process of removing the first blade 71a. It is to be understood that the steps in which the second blade 72a is removed and the steps in which the first blade 71a and the second blade 72a are mounted are familiar to those skilled in the art, and the details are not repeated here. In this manner, the hedge trimmer 100 in the present application can adopt two forms of cutting assemblies. For example, during installation and removal of the cutting assembly, the front housing 20 needs to be opened and then operated. The blades of the other cutting assembly can be replaced without opening the front housing 20, which is more convenient and quick.

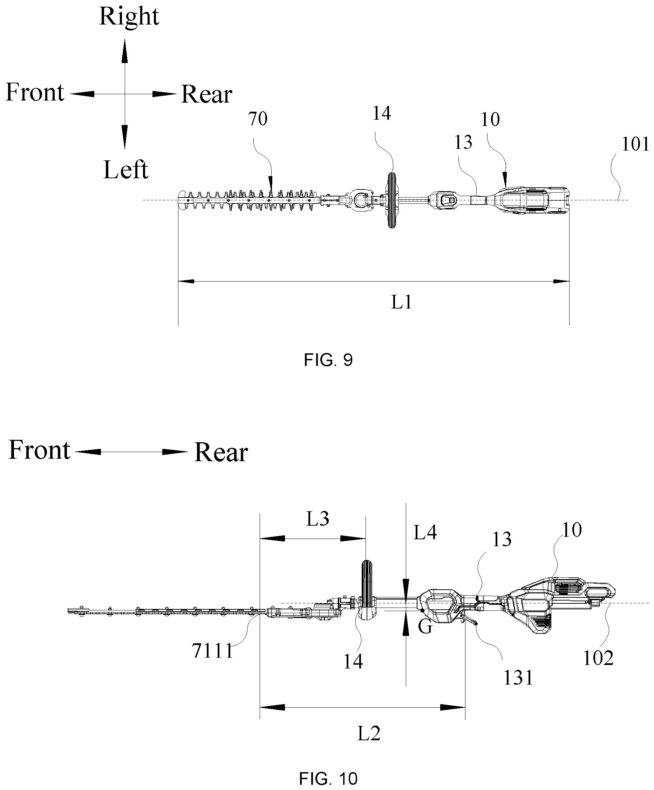

As shown in FIG. 9, in this example, on the longitudinal axis 101, the distance L1 from the front end of the cutting assembly 70 of the hedge trimmer 100 to the rear end of the rear housing 10 is greater than or equal to 1.1 m and less than or equal to 2.2 m. For example, the distance L1 from the front end of the cutting assembly 70 of the hedge trimmer 100 to the rear end of the rear housing 10 is greater than or equal to 0.9 m and less than or equal to 1.8 m. For example, the distance L1 from the front end of the cutting assembly 70 of the hedge trimmer 100 to the rear end of the rear housing 10 is greater than or equal to 0.7 m and less than or equal to 1.5 m. In this manner, the hedge trimmer with the preceding arrangement can be operated with both hands and is more portable and safer; on the other hand, the connecting rod structure is adopted so that the hedge trimmer has a better cutting height, which is more conducive to satisfying different cutting requirements of users.

As shown in FIGS. 9 and 10, the center of gravity G of the hedge trimmer 100 is located between the main handle 13 and an auxiliary handle 14 in the front and rear direction. For example, when the user performs horizontal cutting (as shown in FIG. 9), the user holds the main handle 13 with one hand and a main grip 141 with the other hand. **In** this case, the distance between the projection of the center of gravity G of the hedge trimmer 100 on a plane perpendicular to the up and down direction and the projection of the first axis 102 on the preceding plane is relatively small, almost zero. When the user performs horizontal cutting (as shown in FIG. 10), the user holds the main handle 13 with one hand and a side grip 142 with the other hand. **In** this case, the user's hand holding the side grip 142 can be as close to a connecting portion 143 as possible so that the center of gravity G of the hedge trimmer 100 is as close to the first axis 102 as possible, and the hedge trimmer 100 does not tilt in the left and right direction and can be operated more stably. In this example, the distance L4 from the center of gravity G of the hedge trimmer 100 to the first axis 102 is greater than or equal to 0 and less than or equal to 30 mm. For example, the distance L4 from the center of gravity G of the hedge trimmer 100 to the first axis 102 is greater than or equal to 0 and less than or equal to 20 mm. For example, the distance L4 from the center of gravity G of the hedge trimmer 100 to the first axis 102 is greater than or equal to 0 and less than or equal to 10 mm. In the present application, the center of gravity of the hedge trimmer is set in this manner so that the balance of the whole machine can be ensured and the fatigue of the user when using the hedge trimmer can be reduced.

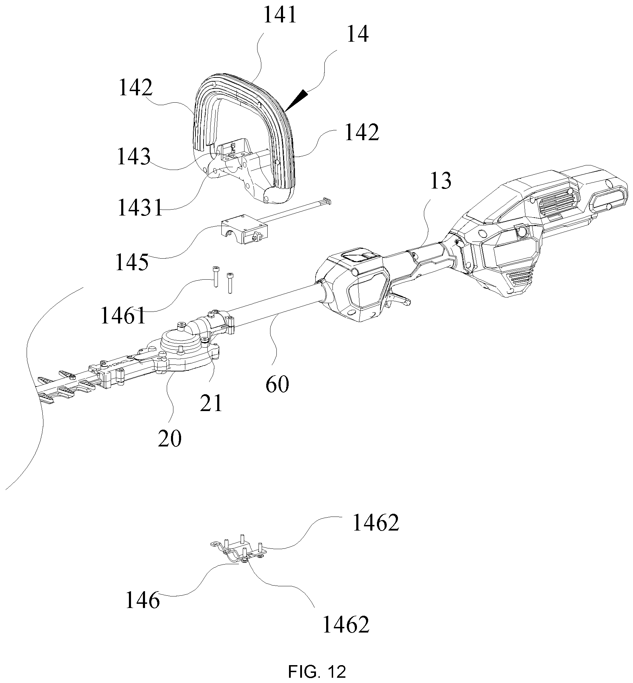

As shown in FIGS. 2 and 12, the hedge trimmer 100 further includes the auxiliary handle 14 located on the front side of the main handle 13 in the direction of the first axis 102. When the user operates the hedge trimmer 100 to perform a cutting operation, the user may hold the auxiliary handle 14 and the main handle 13 with both hands at the same time, thereby achieving a more stable operation. In this example, the main handle 13 and the motor 30 are disposed on the same side of the auxiliary handle 14, and the auxiliary handle 14 is closer to the cutting assembly 70 than the main handle 13. The auxiliary handle 14 is spaced apart from the main handle 13 by a certain distance in the direction of the first axis 102 so that the user can control the hedge trimmer 100 more stably.

For example, the auxiliary handle 14 is configured to be a D-shaped handle and has multiple grips so that the auxiliary handle 14 can satisfy the user's cutting requirements in different directions and is easy to operate without causing fatigue. In this example, the auxiliary handle 14 includes the main grip 141, side grips 142, and the connecting portion 143. The main grip 141 or the side grip 142 is used for the user to hold with the other hand when horizontal cutting or side cutting is performed. For example, the main grip 141 extends along a direction perpendicular to the first axis 102, and the main grip 141 spans the hedge trimmer 100 in the left and right direction. In this case, when the user performs horizontal cutting, the user may hold the main handle 13 with one hand and the main grip 141 of the auxiliary handle 14 with the other hand, thereby performing stable cutting. Two side grips 142 are provided and disposed on two sides of the main grip 141, respectively. The main grip 141 connects the two side grips 142. The extension direction of the side grips 142 is perpendicular to the extension direction of the main grip 141, and the extension direction of the side grips 142 obliquely intersects with the first axis 102. The connecting portion 143 is connected to the two side grips 142, respectively and is configured to fixedly mount the auxiliary handle 14 to the hedge trimmer 100. For example, in a plane perpendicular to the first axis 102, the projection of the auxiliary handle 14 on the plane surrounds a D-shaped region, and the projection of the connecting rod 60 on the preceding plane is at least partially located in the D-shaped region.

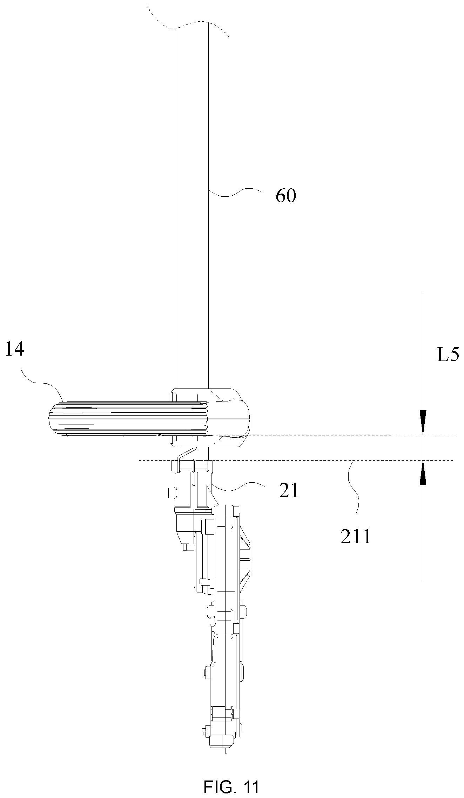

In some examples, the auxiliary handle 14 is fixedly mounted to the connecting rod 60 through the connecting portion 143. In some examples, the auxiliary handle 14 is fixedly mounted to the first connection end 21 of the front housing 20 through the connecting portion 143. In some examples, the auxiliary handle 14 is fixedly connected to both the connecting rod 60 and the first connection end 21 of the front housing 20 through the connecting portion 143. In this example, the connecting portion 143 of the auxiliary handle 14 is connected to the connecting rod 60 through a first locking device 145 and is connected to the first connection end 21 of the front housing 20 through a second locking device 146. As shown in FIG. 11, the first connection end 21 of the front housing 20 is formed with a first end surface 211, and the distance L5 from the auxiliary handle 14 to a plane where the first end surface 211 is located is greater than or equal to 0 and less than or equal to 90 mm. For example, the distance L5 from the auxiliary handle 14 to the plane where the first end surface 211 is located is greater than or equal to 0 and less than or equal to 70 mm. For example, the distance L5 from the auxiliary handle 14 to the plane where the first end surface 211 is located is greater than or equal to 0 and less than or equal to 50 mm. For example, the distance L5 from the auxiliary handle 14 to the plane where the first end surface 211 is located is greater than or equal to 0 and less than or equal to 20 mm. It is to be understood that the distance L5 refers to the distance from a side of the auxiliary handle 14 facing the first end surface 211 to the first end surface 211.

For example, the connecting portion 143 is formed with a groove 1431 capable of accommodating the connecting rod 60. During the assembly process, the connecting rod 60 is placed in the second locking device 146, and then the connecting rod 60 and the second locking device 146 are placed in the preceding groove 1431 and finally fixed to the first connection end 21 of the front housing 20 by first fasteners 1461. At the same time, the second locking device 146, the first locking device 145, and the connecting portion 143 of the auxiliary handle 14 are fixed in the up and down direction by second fasteners 1462. In this manner, while the auxiliary handle 14 is fixedly mounted to the connecting rod 60 by the first locking device 145 and the second locking device 146, the auxiliary handle 14 is fixed to the first connection end 21 of the front housing 20, thereby limiting the auxiliary handle 14 in various directions, improving the stability of the auxiliary handle 14, and improving the safety performance of the whole machine.

The hedge trimmer 100 further includes an operating assembly used for the user to operate to control the state of the hedge trimmer 100. As shown in FIG. 1, the operating assembly includes at least a first switch 131 and a second switch 144. The first switch 131 has a release state and a trigger state. Similarly, the second switch 144 also has a release state and a trigger state. The user can operate the first switch 131 and the second switch 144, thereby achieving switching between the release state and the trigger state. The hedge trimmer 100 further includes a control device. When the first switch 131 and the second switch 144 are both in the trigger state, the control device controls the motor 30 to start. In this example, the first switch 131 is configured to be a trigger. It is to be understood that the first switch 131 is merely an external component that should be connected to a circuit assembly, and the circuit assembly is disposed in the space formed by the main handle 13.

As shown in FIG. 10, in the front and rear direction, the distance L2 from the first switch 131 to a first cutting tooth 7111 of the cutting assembly 70 is greater than or equal to 0.12 m and less than or equal to 1000 mm. For example, the first cutting tooth 7111 of the cutting assembly 70 may be the cutting tooth located at the rearmost end of the first blade 71 or the cutting tooth located at the rearmost end of the second blade 72. For example, in the front and rear direction, the distance L2 from the first switch 131 to the first cutting tooth 7111 of the cutting assembly 70 is greater than or equal to 0.2 m and less than or equal to 0.9 m. In this example, in the front and rear direction, the distance L3 from the auxiliary handle 14 to the first cutting tooth 7111 of the cutting assembly 70 is greater than or equal to 0.3 m and less than or equal to 0.8 m. For example, in the front and rear direction, the distance L3 from the auxiliary handle 14 to the first cutting tooth 7111 of the cutting assembly 70 is greater than or equal to 0.4 m and less than or equal to 0.6 m.

In some examples, the ratio of the distance from the first switch 131 to the first cutting tooth 7111 to the distance from the second switch 144 to the first cutting tooth 7111 is greater than or equal to 1 and less than or equal to 8.5. For example, the ratio of the distance from the first switch 131 to the first cutting tooth 7111 to the distance from the second switch 144 to the first cutting tooth 7111 is greater than or equal to 2 and less than or equal to 6. The ratio of the distance from the first switch 131 to the first cutting tooth 7111 to the distance from the second switch 144 to the first cutting tooth 7111 is greater than or equal to 3 and less than or equal to 5.

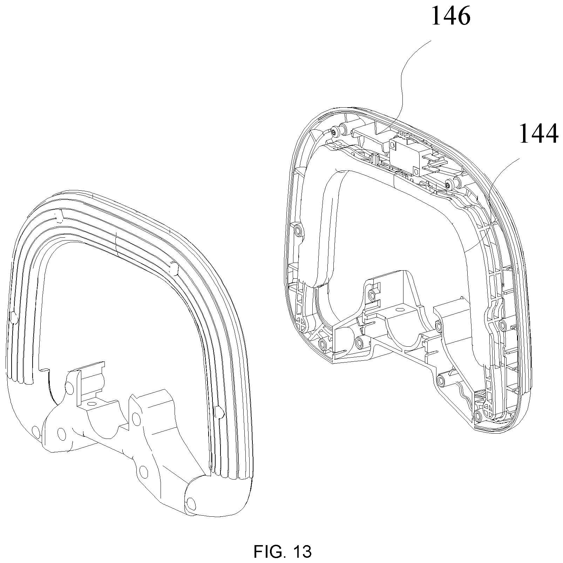

For example, the first switch 131 is mounted to the main handle 13 and is rotatable connected to the main handle 13. The user's hand holding the main handle 13 can operate the first switch 131 to rotate to switch the first switch 131 between the release state and the trigger state. In this example, the first switch 131 is configured to be a trigger. The second switch 144 is mounted to the auxiliary handle 14 and is slidably connected to the auxiliary handle 14. The user's hand holding the auxiliary handle 14 can operate the second switch 144 to rotate to switch the second switch 144 between the release state and the trigger state. As shown in FIG. 13, the auxiliary handle 14 is formed with a third accommodation space 146 configured to accommodate part of the second switch 144. The second switch 144 is disposed on the inner side of the auxiliary handle 14 and substantially along the extension direction of the auxiliary handle 14. In this manner, when the user operates the hedge trimmer 100 at various cutting angles, the second switch 144 can be easily triggered. Further, the second switch 144 is connected to a signal line for outputting signals or a power line for supplying electrical energy. In this example, the power line and the signal line are wrapped with plastic, are located outside the connecting rod 60, and extend along the direction of the first axis 102 to the circuit board assembly 81 in the rear housing 10. In some examples, the second switch 144 may be configured to be a wireless switch, that is, no signal line is provided between the second switch 144 and the control device, and signal transmission is performed through wireless communication.

In some examples, the second switch 144 may be disposed on the connecting rod 60. For example, when the hedge trimmer 100 is not provided with the auxiliary handle 14 or the grip for the user to hold is disposed on the connecting rod 60, the second switch 144 is disposed on the connecting rod 60 accordingly.

In some examples, as shown in FIG. 1, the operating assembly further includes a speed regulation unit, a display unit, a Bluetooth module, and other control interfaces. The preceding control interfaces may be disposed on the rear housing 10 and located on the front side of the main handle 13. Of course, the preceding control interfaces may also be disposed at other positions. For example, the speed regulation unit includes at least a speed regulation switch, and the user controls the rotational speed of the motor 30 through the speed regulation switch. The display unit may be configured to display the current power level of the power device 40. The Bluetooth module may be configured to communicate with other external devices or communicate with internal devices.

Another improvement solution is proposed below for a pole hedge trimmer, which is one of the types of hedge trimmers, thereby improving the separation and/or wear problems between assemblies in the pole hedge trimmer and extending the service life of the pole hedge trimmer.

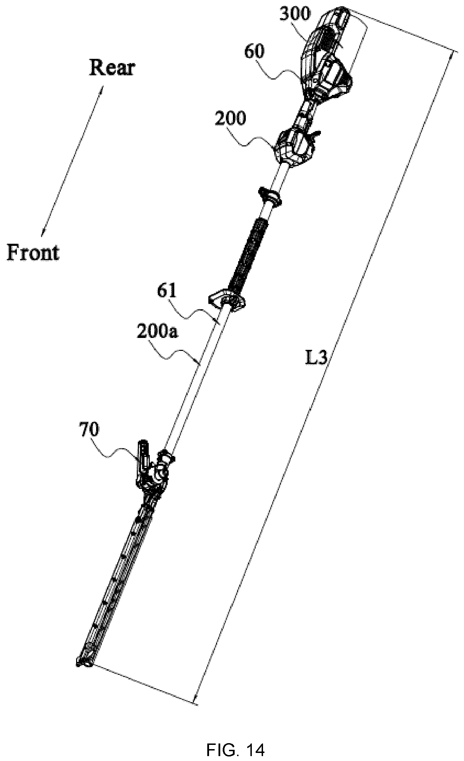

As a garden tool, a pole hedge trimmer 200 shown in FIG. 14 can drive a blade assembly 10 to move. The pole hedge trimmer 200 may be used by the user to prune vegetation such as shrubs, hedges, and branches.

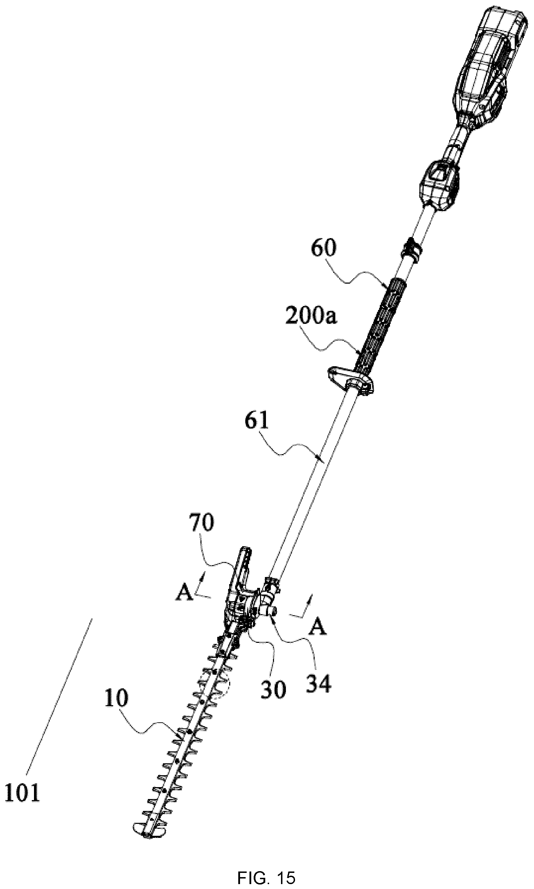

As shown in FIGS. 14 and 15, the pole hedge trimmer 200 includes a body 200a and an energy source 300. The body 200a includes a housing assembly 60, a power assembly, a switch assembly 40, a transmission device 30, the blade assembly 10, and a switching assembly 70. In this example, the energy source 300 is a battery pack, and the battery pack is detachably connected to the body 200a. As another example, the battery pack may be separated from the body 200a, that is, the battery pack supplies power to the body 200a by a connecting wire.

To clearly illustrate the technical solution of the present application, the front and rear are defined as shown in FIG. 14. It is to be noted that, unless otherwise specified, the pole hedge trimmer 200 described below is in the front-to-rear fully extended state as shown in FIG. 14.

The housing assembly 60 is the main component of the pole hedge trimmer 200. The housing of the body 200a is formed with an accommodation space, and the switch assembly 40, the power assembly, the transmission device, and the blade assembly 10 are at least partially disposed in the accommodation space. The housing assembly 60 is formed with or connected to a handle portion and a grip 50 for the user to hold. The user can operate the pole hedge trimmer 200 by holding the handle portion with one hand and the grip 50 with the other hand.

The power assembly is configured to provide power for the pole hedge trimmer 200, the power assembly includes an electric motor 20, and the electric motor 20 includes a motor shaft 21 for outputting power. As another example, the power assembly may be an engine or another part capable of outputting power.

The switch assembly 40 is configured to control the start or stop of the electric motor 20. The switch assembly 40 includes a trigger 41 driven by the user. The trigger 41 is rotatable about a central axis 103 to start the electric motor. The switch assembly 40 is adjacent to the grip 50 so that the user can easily activate the trigger 41 when holding the grip 50.

The housing assembly 60 is further formed with a long pole assembly 61 extending along the first direction and disposed between the power assembly and the blade assembly 10. The long pole assembly 61 has a certain length in the first direction so that when the user stands on the ground, the user can operate the pole hedge trimmer 200 to prune branches at high places. The long pole assembly 61 may be made of carbon fiber material so that the weight of the pole hedge trimmer 200 can be effectively reduced, thereby making the pole hedge trimmer 200 more convenient for the user to operate.

The switching assembly 70 is configured to switch the cutting direction of the blade assembly 10. It is to be understood that the blade assembly 10 is rotatable relative to the long pole assembly 61. The user can switch the cutting direction of the blade assembly 10 according to actual conditions so that the user can perform cutting better. FIG. 14 shows the pole hedge trimmer in a fully extended state, where the extension direction of the blade assembly 10 is basically parallel to the extension direction of the long pole assembly 61.

The transmission device 30 is disposed between the power assembly and the blade assembly 10 and is configured to transmit the power outputted by the electric motor 20 to the blade assembly 10.

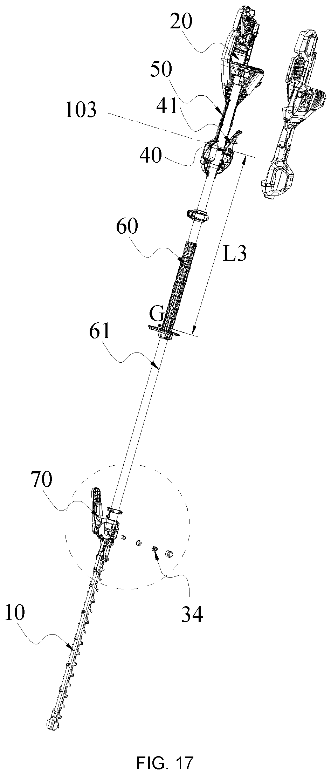

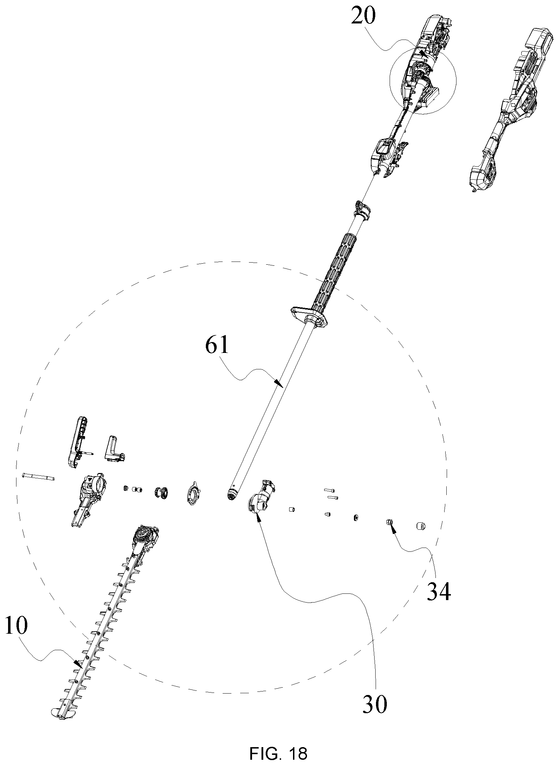

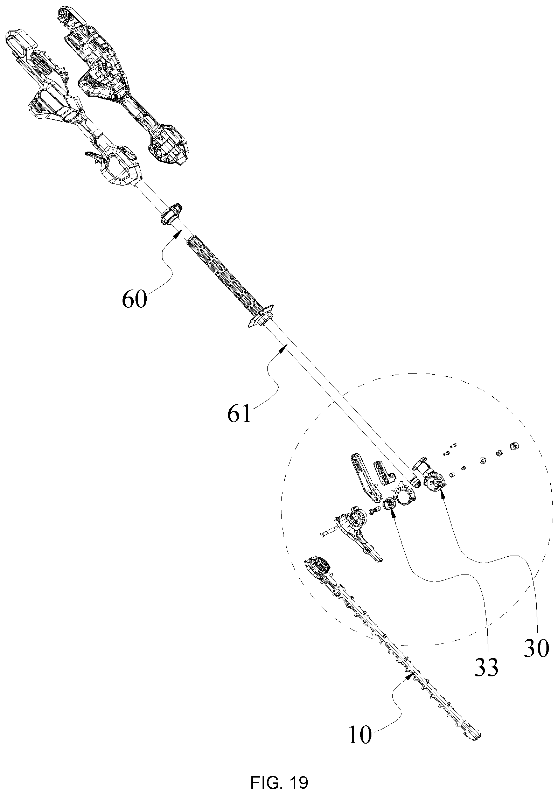

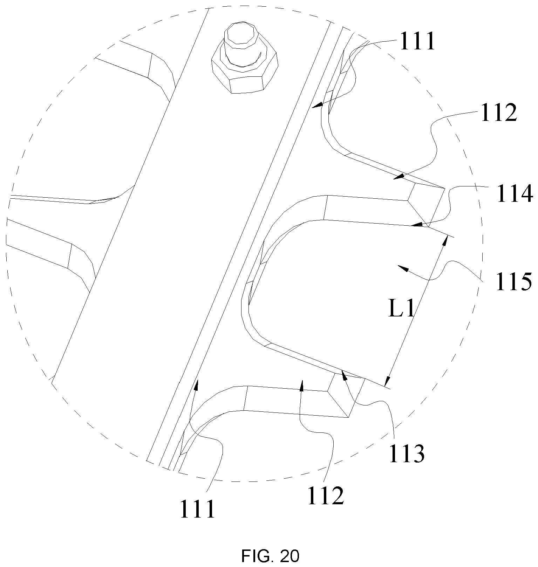

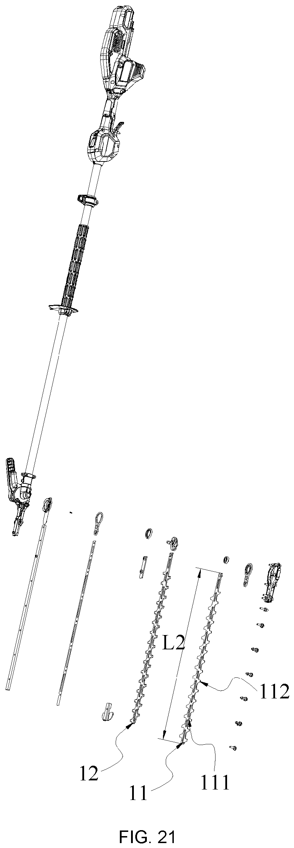

As shown in FIGS. 14 to 21, the blade assembly 10 includes a first blade 11 and a second blade 12. The electric motor 20 drives the second blade 12 to move relative to the first blade 11, that is, the second blade 12 can reciprocate relative to the first blade 11 along the direction of a first straight line 101, thereby implementing the cutting function of the hedge trimmer. The first blade 11 includes a body portion 111 and cutting portions 112. The body portion 111 extends basically along the direction of the first straight line 101, and the cutting portion 112 extends from the body portion 111 in a direction perpendicular to the first straight line 101. The cutting portion 112 is formed with a front cutting edge 113 and a rear cutting edge 114 on the front and rear sides of the cutting portion 112 along the direction of the first straight line 101, respectively. A region is formed between the front cutting edge 113 of one cutting portion 112 and the adjacent cutting portion 112 located on the front side of the cutting portion 112, where the region allows shrubs and hedges to be cut to at least partially enter between the two adjacent cutting portions 112. The region is defined as a unit cutting region 115, and the unit cutting region 115 has a first length L1 along the direction of the first straight line 101.

It is to be understood that the front cutting edge 113 has a root connected to the body portion 111 and a top opposite to the root along the direction perpendicular to the first straight line 101, and the rear cutting edge 114 has a root connected to the body portion 111 and a top opposite to the root along the direction perpendicular to the first straight line 101. In fact, the first length L1 of the unit cutting region 115 along the direction of the first straight line 101 is the distance between the top of the front cutting edge 113 of one cutting portion 112 and the top of the rear cutting edge 114 of the adjacent cutting portion 112 located on the front side of the cutting portion 112. In this example, the pole hedge trimmer 200 refers to the weight of the body 200a with the energy source 300 removed. The pole hedge trimmer 200 is a garden tool for the user on the ground or at a low place to prune high branches. Therefore, the cutting efficiency of the hedge trimmer and the weight of the body 200a are extremely important to the user. As an example, the ratio of the first length L1 to the weight of the body 200a is greater than or equal to 4.5 mm/kg and less than or equal to 7 mm/kg. The ratio of the first length L1 to the weight of the body 200a is set within the preceding range. In this manner, the weight of the body 200a of the pole hedge trimmer 200 is relatively light, and the dimension of the unit cutting region 115 of the blade assembly 10 is relatively large so that the pole hedge trimmer 200 is light in weight and has a strong cutting capability, and the user can use a lightweight pole hedge trimmer 200 to cut relatively stubborn and thick vegetation. For example, the ratio of the first length L1 to the weight of the body 200a is greater than or equal to 5 mm/kg and less than or equal to 6.5 mm/kg.

The structure of the second blade 12 is basically the same as the structure of the first blade 11. The second blade 12 includes a second body portion 111 with the same structure as the body portion 111 and second cutting teeth with the same structures as the cutting portions 112, and the details are not repeated herein.

With continued reference to FIGS. 14 to 21, the blade assembly 10 has a second length L2 along the direction of the first straight line 101, where the ratio of the second length L2 to the weight of the body 200a is greater than or equal to 110 mm/kg and less than or equal to 145 mm/kg. The length of the blade assembly 10 refers to the length of the first blade 11 along the direction of the first straight line 101. The longer the length of the first blade 11 along the direction of the straight line is, the more unit cutting regions 115 can be set on the first blade 11 in the case where the distances between the unit cutting regions 115 are the same. That is to say, under the same conditions, the longer the blade length is, the more unit cutting regions 115 the pole hedge trimmer 200 has for pruning. At the same time, it is to be noted that the longer the blade length is, the larger the weight of the blade assembly 10 is, and the larger the weight of the body 200a is. When pruning for a long time, the user is more likely to get tired, affecting the working efficiency. Therefore, the ratio of the second length L2 to the weight of the body 200a is set within the preceding range so that the efficiency of the pole hedge trimmer 200 can be ensured while the weight of the body 200a can be considered, thereby ensuring better ergonomics of the pole hedge trimmer 200. For example, the ratio of the second length L2 to the weight of the body 200a is greater than or equal to 120 mm/kg and less than or equal to 130 mm/kg. The ratio of the second length L2 to the weight of the body 200a is set within the preceding range so that a better effect is ensured.

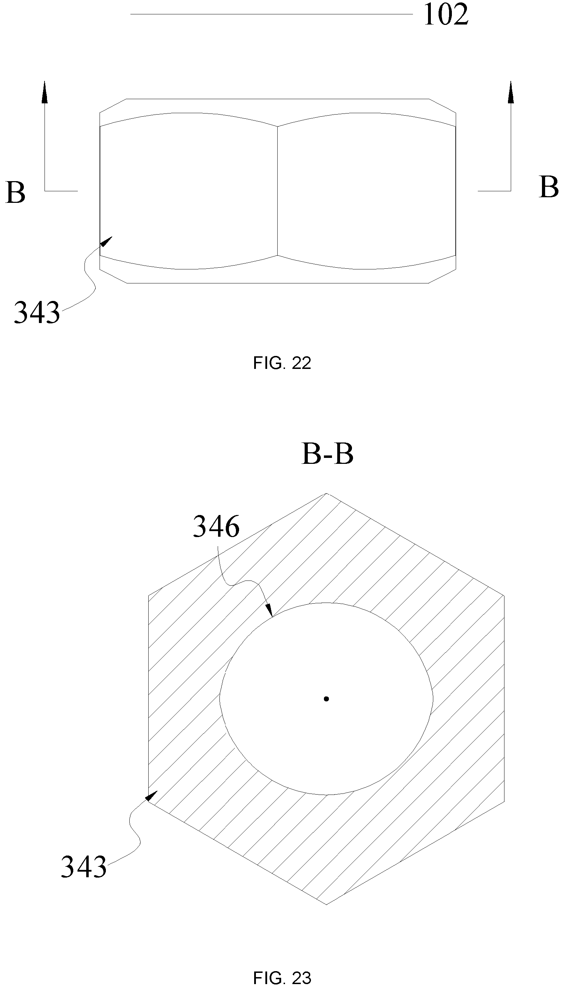

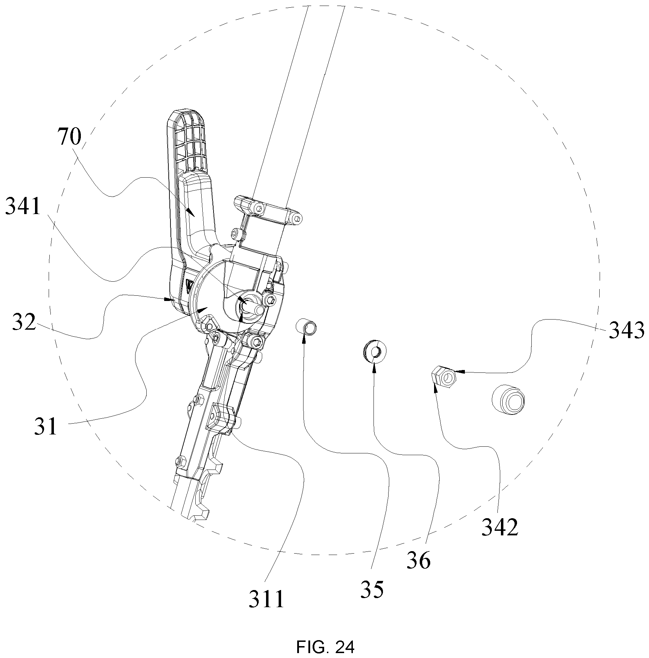

Referring to FIGS. 22 to 26, the power assembly, the long pole assembly 61, the transmission device, and the blade assembly 10 are arranged in sequence to form the body of the pole hedge trimmer 200. The pole hedge trimmer 200 has a center of gravity G, where the distance from the center of gravity of the pole hedge trimmer 200 to the central axis 103 of the trigger 41 is greater than or equal to 55 cm and less than or equal to 70 cm. The center of gravity of the pole hedge trimmer 200 refers to the state of the pole hedge trimmer 200 when the energy source 300 is not mounted. In this example, the center of gravity G of the body 200a is not affected by the installation of battery packs of different capacities, and the center of gravity of the pole hedge trimmer 200 moves toward the battery pack due to the installation of battery packs of different capacities, which is convenient for the user to control the pole hedge trimmer 200. When the pole hedge trimmer 200 operates, the user needs to hold the handle portion with one hand and the grip 50 with the other hand to lift the pole hedge trimmer 200 and control the cutting direction of the pole hedge trimmer 200 by holding the handle portion and the grip 50 with two hands, thereby controlling the pole hedge trimmer 200. The height of the center of gravity affects the gravitational potential energy, and the magnitude of the gravitational potential energy directly affects the magnitude of the force applied by the user to the pole hedge trimmer 200 in use. Therefore, the center of gravity is set as close to the rear end of the pole hedge trimmer 200 as possible so that the user can apply a relatively small force to the pole hedge trimmer 200, which is convenient for the user to operate the pole hedge trimmer 200.

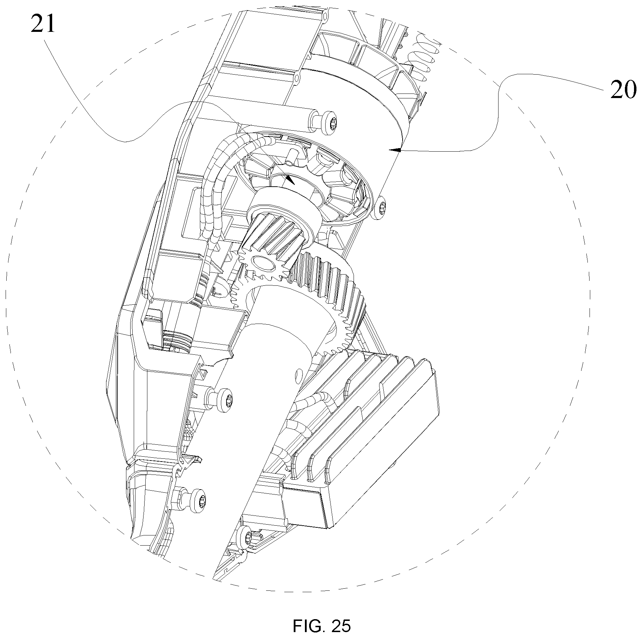

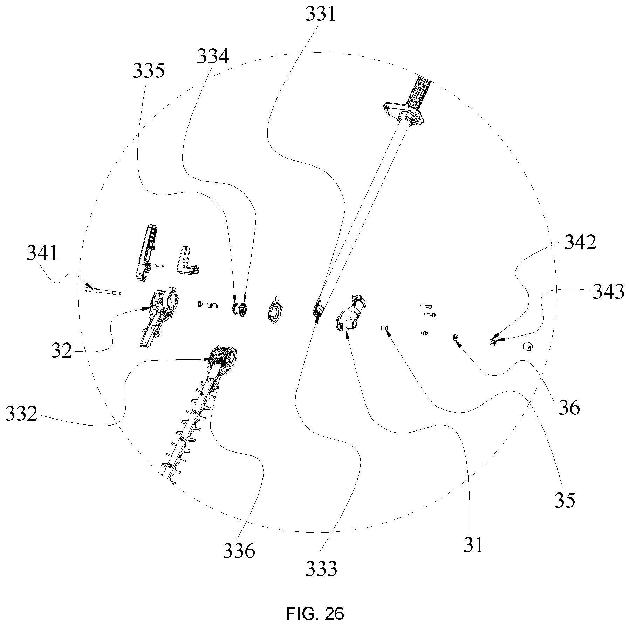

Referring to FIGS. 25 and 26, the transmission device 30 includes a first housing 31, a second housing 32, a transmission assembly 33, and a fastening assembly 34. The first housing 31 and the second housing 32 are connected to form an accommodation cavity. The transmission assembly 33 is disposed in the accommodation cavity and is used for transmitting power between the motor shaft 21 and the blade assembly 10. The fastening assembly 34 is configured to fasten the first housing 31 and the second housing 32, that is to say, the fastening assembly 34 is configured to connect the first housing 31 to the second housing 32. The fastening assembly 34 includes a connecting rod 341, a first fastener 342, a second fastener 343, and a washer 36. The connecting rod 341 penetrates and connects the second housing 32, the first housing 31, and at least part of the transmission assembly 33. The first fastener 342 is connected to the connecting rod 341 to limit the displacement of the first housing 31. The second fastener 343 is connected to the connecting rod 341 to limit the displacement of the first fastener 342. The washer 36 is disposed between the first housing 31 and the first fastener 342.

The transmission assembly 33 includes a first transmission group 331 and a second transmission group 332 that are capable of mating with each other. The motor shaft 21 of the electric motor 20 drives the first transmission group 331 to move so that the second transmission group 332 moves together with the first transmission group 331, and the second transmission group 332 drives the blade assembly 10 to move. The first transmission group 331 includes a first transmission member 333 and a second transmission member 334. The first transmission member 333 can be driven by the motor shaft 21 to rotate, and the second transmission member 334 meshes with the first transmission member 333. The second transmission group 332 includes a third transmission member 335 and a fourth transmission member 336. When the second transmission member 334 moves, the third transmission member 335 can move together with the second transmission member 334. The fourth transmission member 336 meshes with the third transmission member 335, and the fourth transmission member 336 is connected to the blade assembly 10. As an example, the transmission device 30 further includes a drive rod at least partially disposed in the long pole assembly 61, and the drive rod connects the motor shaft 21 to the first transmission member 333. For example, an end of the drive rod is fixedly connected to or integrally formed with the first transmission member 333, and the other end of the drive rod mates with the motor shaft 21. In this example, the drive rod and the first transmission member 333 are connected by splines. The other end of the drive rod is connected to the motor shaft 21 by gears, that is, a large gear is connected to the drive rod, a small gear is connected to the motor shaft 21, and the large gear and the small gear are meshed and connected. In this manner, the power outputted by the motor shaft 21 can be transmitted to the first transmission member 333. The first transmission member 333 and the second transmission member 334 are meshed and connected, that is, when the first transmission member 333 rotates, the second transmission member 334 rotates together with the first transmission member 333. When the second transmission member 334 rotates, the third rotation member rotates together with the second transmission member 334. The third transmission member 335 and the fourth transmission member 336 are meshed and connected, that is, the fourth transmission member 336 can be driven by the third transmission member 335. The third transmission member 335 and the second transmission member 334 are integrally formed. A through hole penetrating the third transmission member 335 and the second transmission member 334 is formed on the third transmission member 335 and the second transmission member 334, and the connecting rod 341 can pass through the preceding through hole. That is to say, the connecting rod 341 passes through the second housing 32, the through hole, and the first housing 31 and is connected to the first fastener 342. The connecting rod 341 is roughly T-shaped. After the connecting rod 341 passes through the second housing 32, the T-shaped end of the connecting rod 341 abuts against the second housing 32.

In this example, the first transmission member 333, the second transmission member 334, the third transmission member 335, and the fourth transmission member 336 are all bevel gears. That is to say, the pole hedge trimmer 200 adopts the two-stage transmission, and the structure of the cutting transmission assembly 33 is simple and easy to implement. The gear ratio of the first transmission group 331 is greater than or equal to 3 and less than or equal to 4. The gear ratio of the second transmission group 332 is greater than or equal to 2 and less than or equal to 3. Within this range, the first transmission group 331 and the second transmission group 332 can achieve a better transmission function and extend the service life of the body 200a. In an example, the gear ratio of the first transmission group 331 is 3.44. The gear ratio of the second transmission group 332 is 2.7.

As an example, external threads are formed on the connecting rod 341, first internal threads mating with the external threads on the connecting rod 341 are formed on the first fastener 342, and second internal threads 346 mating with the external threads on the connecting rod 341 are formed on the second fastener 343, that is to say, both the first fastener 342 and the second fastener 343 are threadedly connected to the connecting rod 341. The distances between the second internal threads 346 and the external threads along the circumferential direction of the connecting rod 341 are inconsistent. The pole hedge trimmer 200 generates relatively large vibrations when operating, so the first housing 31, the second housing 32, and the transmission assembly 33 need to be stably connected, thereby ensuring the stability of the pole hedge trimmer 200 when operating, preventing the fasteners from falling off due to the vibrations generated by the pole hedge trimmer 200, and preventing the tool from suddenly disintegrating during movement. After the pole hedge trimmer 200 operates for a long time, the internal parts of the tool are bound to be damaged. In this case, the maintenance worker may need to dismantle the installation fastening assembly 34 to remove the first housing 31. However, for the hedge trimmer currently on the market, when the maintenance worker removes the second fastener 343, the second fastener 343 needs to be damaged, resulting in the second fastener 343 being unusable. In this case, the maintenance worker needs to replace the second fastener 343 with a new second fastener 343. Alternatively, even if the second fastener 343 does not need to be damaged, the connecting rod 341 is damaged during the removal of the second fastener 343, shortening the service life of the pole hedge trimmer 200 and making the distances between the second internal threads 346 and the external threads along the circumferential direction of the connecting rod 341 inconsistent. In this manner, when the maintenance worker removes the second fastener 343, neither the second fastener 343 nor the external threads on the connecting rod 341 are damaged. In this example, in the cross section of the second fastener 343 along the second direction, the second internal threads 346 are basically elliptical. The second direction is basically perpendicular to the extension direction of the connecting rod 341.

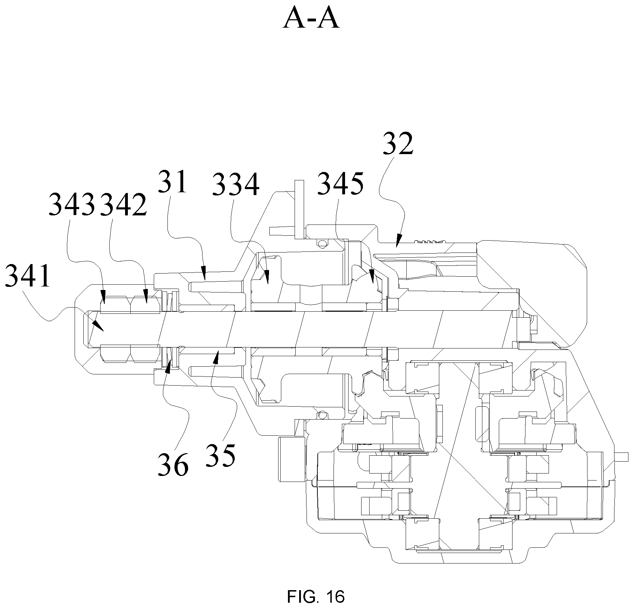

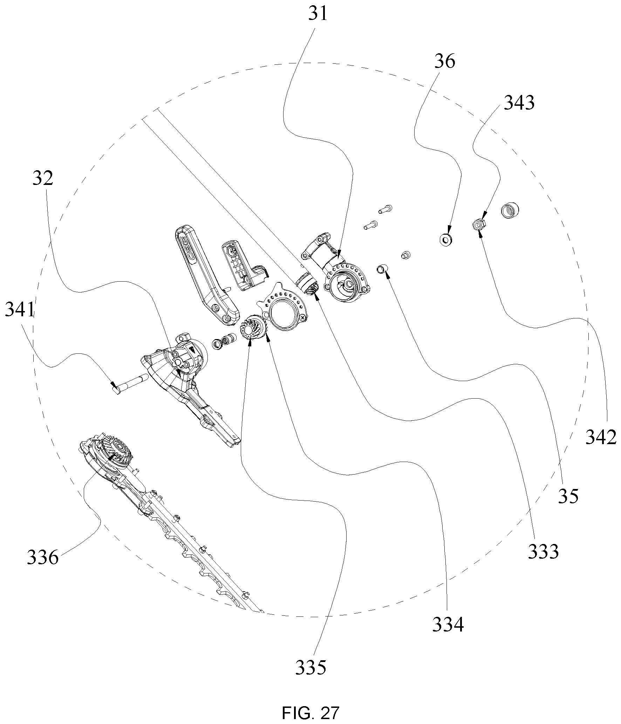

As shown in FIGS. 16, 26, and 27, the transmission device 30 further includes a bushing 35 disposed between the connecting rod 341 and the first housing 31, and the second transmission member 334 and the third transmission member 335 are sleeved on the connecting rod 341. When the pole hedge trimmer 200 operates, the second transmission member 334 and the third transmission member 335 operate at a high speed, inevitably causing the following: the connecting rod 341 vibrates and friction is generated between the connecting rod 341 and the first housing 31. After a long time, the service life of the first housing 31 is affected, and then the service life of the pole hedge trimmer 200 is affected. The bushing 35 is disposed between the first housing 31 and the connecting rod 341, thereby effectively extending the service life of the first housing 31 and the service life of the whole machine. For example, along the extension direction of the connecting rod 341, the first housing 31 is recessed in the direction toward the transmission assembly 33 to form a groove 311, and the bushing 35 is disposed in the groove 311. For example, the washer 36 is disposed between the bushing 35 and the fastening assembly 34. The washer 36 is configured to reduce the wear of the bushing 35 on the first fastener 342, thereby ensuring the stability of the connection between the fastening assembly 34, the first housing 31, and the second housing 32, thereby extending the service life of the transmission device 30 and the service life of the pole hedge trimmer 200. In this example, the bushing 35 may be made of the wear-resistant metal material.

## Claims

1. A hedge trimmer, comprising:
a front end device comprising at least a cutting assembly extending along a longitudinal axis and a front housing for supporting the cutting assembly;
a rear end device comprising at least a motor for driving the cutting assembly and a rear housing for supporting the motor;
a connecting rod connecting the front end device to the rear end device;
a power device supported by the rear housing and configured to supply electrical energy to the motor;
a main handle connected to a first switch; and
a second switch disposed on a front side of the first switch;
wherein in a direction of the longitudinal axis, a distance between the first switch and a first cutting tooth of the cutting assembly is greater than or equal to 120 mm and less than or equal to 1000 mm.

2. The hedge trimmer of claim 1, further comprising a transmission assembly and a transmission shaft, wherein the transmission assembly comprises a first transmission device and a second transmission device; the first transmission device is located in the rear housing, and the second transmission device is located in the front housing; the transmission shaft connects the first transmission device to the second transmission device and is configured to transmit power between the first transmission device and the second transmission device.

3. The hedge trimmer of claim 2, wherein the first transmission device is connected to the motor and is configured to transmit power outputted by the motor to the transmission shaft; and the second transmission device is connected to the cutting assembly and is configured to transmit power on the transmission shaft to the cutting assembly.

4. The hedge trimmer of claim 3, wherein the connecting rod extends along a direction of a first axis and is formed with a through hole extending along the direction of the first axis, and at least part of the transmission shaft is located in the through hole.

5. The hedge trimmer of claim 4, wherein the second transmission device comprises at least a first bevel gear and a second bevel gear; the transmission shaft drives the first bevel gear to rotate about the first axis, and the first bevel gear drives the second bevel gear to rotate about a second axis; and the first axis is perpendicular to the second axis.

6. The hedge trimmer of claim 5, wherein the first bevel gear is formed with a first conical surface, and a distance between the second axis and the first conical surface is less than or equal to 18 mm.

7. The hedge trimmer of claim 6, wherein a first oil fill port is formed on the front housing, and in an up and down direction, the first oil fill port is opposite to a meshing point of the first bevel gear and the second bevel gear.

8. The hedge trimmer of claim 1, wherein a coupling portion for connecting the power device is further formed on the rear housing, the power device is detachably connected to the coupling portion, the rear housing further comprises an accommodation portion for forming a first accommodation space, and the motor is disposed in the first accommodation space.

9. The hedge trimmer of claim 8, wherein the connecting rod extends along a direction of a first axis, and the power device is detachably connected to the coupling portion along a first direction or a second direction and is configured to supply power to the motor, wherein the first direction is parallel to the first axis, and the second direction intersects with the first axis.

10. The hedge trimmer of claim 9, wherein in a reference plane perpendicular to an up and down direction, an orthographic projection of the motor on the reference plane overlaps an orthographic projection of the power device on the reference plane.

11. The hedge trimmer of claim 1, wherein when the first switch and the second switch are operated simultaneously, the motor drives the cutting assembly to operate.

12. The hedge trimmer of claim 10, further comprising an auxiliary handle having at least one grip, wherein the auxiliary handle is located on a front side of the main handle in a front and rear direction, and the second switch is disposed on the auxiliary handle.

13. The hedge trimmer of claim 12, wherein the front housing is formed with or connected to a first connection end for mounting the connecting rod, the connecting rod extends along the direction of the first axis, and the auxiliary handle is fixedly mounted onto the connecting rod or the first connection end of the front housing.

14. The hedge trimmer of claim 13, wherein in a plane perpendicular to the first axis, a projection of the auxiliary handle on the plane surrounds a D-shaped region, and a projection of the connecting rod on the plane is at least partially located in the D-shaped region.

15. The hedge trimmer of claim 14, wherein the first switch is configured to be a trigger, the trigger is rotatably connected to the main handle, the second switch is partially located in a third accommodation space formed by the auxiliary handle, and the second switch is slidably connected to the auxiliary handle.

16. A hedge trimmer, comprising:
a front end device comprising at least a cutting assembly extending along a longitudinal axis and a front housing for supporting the cutting assembly;
a rear end device comprising at least a motor for driving the cutting assembly and a rear housing for supporting the motor;
a connecting rod connecting the front end device to the rear end device;
a power device supported by the rear housing and configured to supply electrical energy to the motor; and
an operating assembly used for a user to operate to control operation of the motor and comprising at least a first switch and a second switch, wherein the second switch is disposed on a front side of the first switch;
wherein in a direction of the longitudinal axis, a distance from a front end of the cutting assembly to a rear end of the rear housing is greater than or equal to 1.1 m and less than or equal to 2.2 m.

17. A hedge trimmer, comprising:
a front end device comprising at least a cutting assembly extending along a longitudinal axis and a front housing for supporting the cutting assembly;
a rear end device comprising at least a motor for driving the cutting assembly and a rear housing for supporting the motor;
a connecting rod connecting the front end device to the rear end device;
a power device supported by the rear housing and configured to supply electrical energy to the motor;
a main handle connected to a first switch; and
a second switch disposed on a front side of the first switch;
wherein in a direction of the longitudinal axis, a ratio of a distance from the first switch to a first cutting tooth of the cutting assembly to a distance from the second switch to the first cutting tooth is greater than or equal to 1 and less than or equal to 8.3.

18. The hedge trimmer of claim 17, further comprising a circuit board assembly disposed in the rear housing, wherein the first switch and the second switch are connected to the circuit board assembly, and communication between the circuit board assembly and the second switch is configured to be wired communication or wireless communication.

19. The hedge trimmer of claim 17, further comprising a control interface used for a user to operate to control a state of the hedge trimmer, wherein the control interface is disposed on an upper surface of the rear housing, and the control interface comprises at least a speed regulation switch for controlling a rotational speed of the motor and a display interface for displaying a state of the power device.

20. The hedge trimmer of claim 17, wherein the cutting assembly comprises a first blade, a second blade, and a blade support for supporting the first blade and the second blade, the blade support extends along the direction of the longitudinal axis, and the blade support is made of a mixture of carbon fiber material and glass fiber material.

21. A hedge trimmer, comprising:
a front end device comprising at least a cutting assembly extending along a longitudinal axis and a front housing for supporting the cutting assembly;
a rear end device comprising at least a motor for driving the cutting assembly and a rear housing for supporting the motor;
a connecting rod extending along a first axis and connecting the front end device to the rear end device;
a power device supported by the rear housing and configured to supply electrical energy to the motor; and
an operating assembly used for a user to operate to control operation of the motor and comprising at least a first switch and a second switch, wherein the second switch is disposed on a front side of the first switch;
wherein the hedge trimmer further comprises a transmission device driven by the motor, at least part of the transmission device is disposed in the front housing, and a distance from a center of gravity of the hedge trimmer to the first axis is greater than or equal to 0 and less than or equal to 30 mm.

22. The hedge trimmer of claim 21, wherein the rear housing comprises an accommodation portion for forming a first accommodation space and a main handle for the user to hold, the first switch is connected to the main handle, the motor is disposed in the first accommodation space, and the main handle is located on a front side of the motor.

23. The hedge trimmer of claim 22, further comprising an auxiliary handle fixedly mounted onto the connecting rod, wherein the auxiliary handle is located in front of the main handle in a front and rear direction, the second switch is connected to the auxiliary handle, and the auxiliary handle is formed with a main grip and a plurality of side grips for the user to hold.

24. The hedge trimmer of claim 22, wherein the rear housing is formed with a coupling portion for detachably connecting a battery pack, wherein in a direction of the first axis, the coupling portion is located on a rear side of the main handle; and in a reference plane perpendicular to an up and down direction, an orthographic projection of the motor on the reference plane overlaps an orthographic projection of the power device on the reference plane.

25. The hedge trimmer of claim 24, wherein the power device is detachably connected to the coupling portion along a first direction or a second direction and is configured to supply power to the motor, wherein the first direction is parallel to the direction of the first axis, and the second direction intersects with the direction of the first axis.

26. The hedge trimmer of claim 21, wherein the transmission device comprises a first transmission device and a second transmission device, and the hedge trimmer further comprises a transmission shaft configured to connect the first transmission device to the second transmission device.

27. The hedge trimmer of claim 26, wherein the first transmission device is located in a first accommodation space formed by the rear housing and is configured to transmit power outputted by the motor to the transmission shaft; and the second transmission device is located in a second accommodation space formed by the front housing and is configured to transmit power on the transmission shaft to the cutting assembly.

28. The hedge trimmer of claim 27, wherein the second transmission device comprises at least a first bevel gear and a second bevel gear; the transmission shaft drives the first bevel gear to rotate about the first axis, and the first bevel gear drives the second bevel gear to rotate about a second axis; and the first axis is perpendicular to the second axis.

29. The hedge trimmer of claim 28, wherein the first bevel gear is formed with a first conical surface, and a distance between the second axis and the first conical surface is less than or equal to 18 mm.

30. The hedge trimmer of claim 29, wherein a first oil fill port is formed on the front housing, and in an up and down direction, the first oil fill port is opposite to a meshing point of the first bevel gear and the second bevel gear.

31. A hedge trimmer, comprising:
a front end device comprising at least a cutting assembly extending along a longitudinal axis and a front housing for supporting the cutting assembly;
a rear end device comprising at least a motor for driving the cutting assembly and a rear housing for supporting the motor;
a connecting rod connecting the front end device to the rear end device;
a main handle connected to a first switch; and
an auxiliary handle having at least one grip and connected to a second switch for a user to operate;
wherein the front housing is formed with or connected to a first connection end for mounting the connecting rod, the first connection end is formed with a first end surface, and a distance from each of the at least one grip to a plane where the first end surface is located is greater than or equal to 0 and less than or equal to 90 mm.

32. The hedge trimmer of claim 31, wherein the connecting rod extends along a direction of a first axis, and the auxiliary handle is fixedly mounted onto the connecting rod or the first connection end of the front housing.

33. The hedge trimmer of claim 32, wherein the rear end device further comprises the main handle, the auxiliary handle is located on a front side of the main handle in the direction of the first axis, and the auxiliary handle is formed with a main grip and a plurality of side grips for the user to hold.

34. The hedge trimmer of claim 33, wherein in a plane perpendicular to the first axis, a projection of the auxiliary handle on the plane surrounds a D-shaped region, and a projection of the connecting rod on the plane is at least partially located in the D-shaped region.

35. The hedge trimmer of claim 32, further comprising the motor for driving the cutting assembly to operate, wherein the rear housing further comprises an accommodation portion for forming a first accommodation space, and the motor is disposed in the first accommodation space.

36. The hedge trimmer of claim 35, further comprising the first switch and the second switch used by the user to operate to start the motor, wherein when the first switch and the second switch are operated simultaneously, the motor drives the cutting assembly to operate.

37. The hedge trimmer of claim 36, wherein the first switch is disposed on the main handle and is rotatably connected to the main handle; and the second switch is disposed on an inner side of the auxiliary handle and is disposed basically along an extension direction of the auxiliary handle.

38. The hedge trimmer of claim 37, further comprising a circuit board assembly disposed in the first accommodation space, wherein the first switch and the second switch are connected to the circuit board assembly, and communication between the circuit board assembly and the second switch is configured to be wired communication or wireless communication.

39. The hedge trimmer of claim 35, further comprising a first transmission device, a second transmission device, and a transmission shaft connected between the first transmission device and the second transmission device.

40. The hedge trimmer of claim 39, wherein the first transmission device is located in the first accommodation space formed by the rear housing, the second transmission device is disposed in a second accommodation space formed by the front housing, the connecting rod is formed with a through hole extending along the direction of the first axis, and the transmission shaft extends along the direction of the first axis and is disposed in the through hole.
